**Europäisches Patentamt**

**European Patent Office**

**Office européen des brevets**

(19)

(11) Veröffentlichungsnummer: **0 063 679**
**B1**

(12) # EUROPÄISCHE PATENTSCHRIFT

(45) Veröffentlichungstag der Patentschrift:
21.08.85

(51) Int. Cl.⁴: **B 25 B 31/00, B 25 B 27/00**

(21) Anmeldenummer: **82101316.6**

(22) Anmeldetag: **20.02.82**

(54) Bohrvorrichtung zur Herstellung von Bohrlöchern mit Hinterschneidung.

(30) Priorität: **18.04.81 DE 3115815**

(43) Veröffentlichungstag der Anmeldung:
**03.11.82 Patentblatt 82/44**

(45) Bekanntmachung des Hinweises auf die Patenterteilung:
**21.08.85 Patentblatt 85/34**

(84) Benannte Vertragsstaaten:
**AT BE CH FR GB IT LI NL SE**

(56) Entgegenhaltungen:
**CH - A - 619 879**

(73) Patentinhaber: **artur fischer forschung,**
**Weinhalde 14 - 18, D-7244 Waldachtal 3 (Tumlingen) (DE)**

(72) Erfinder: **Fischer, Artur, Dr.h.c., Weinhalde 34,**
**D-7244 Waldachtal 3/Tumlingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft eine zur Herstellung von Bohrlöchern mit Hinterschneidung bestimmte Bohrvorrichtung, bestehend aus einem Bohrer mit einem radial den Bohrschaft überragende Seitenschneiden aufweisenden Bohrplättchen, einer Bohreraufnahme mit Anschlagbund, der sich in einer Mulde einer über den Bohrschaft gestülpten Anschlagplatte zur Bildung eines Schwenklagers abstützt, und einer mit der Anschlagplatte verbindbaren Bohrglocke, die mit einem Absaugstutzen versehen ist.

Eine solche Bohrvorrichtung ermöglicht in einfacher Weise das Herstellen von Bohrungen mit einer Hinterschneidung in der Bohrlochtiefe durch Schwenken des Bohrers, wenn die gewünschte Bohrlochtiefe erreicht ist. Die Anschlagplatte nimmt dabei den beim Bohr- und Schwenkvorgang entstehenden Anpreßdruck auf. In das derart vorbereitete Bohrloch wird ein Dübel eingesetzt, der in der Weise gestaltet ist, daß er in der Hinterschneidung des Bohrloches aufspreizt. Damit entsteht eine Formschlußverankerung, deren hoher Haltewert selbst dann gewährleistet ist, wenn das Bohrloch größer ausfällt bzw. wenn bei Deckenbefestigungen durch Rißbildung eine nachträgliche Vergrößerung des Bohrloches eintritt.

Zur Verankerung von Dübeln sind unter anderem in Bohrhämmer und Schlagbohrmaschinen einspannbare Einschlagwerkzeuge bekannt. Der Nachteil derartiger Einschlagwerkzeuge besteht darin, daß entweder eine zweite Schlagbohrmaschine für das Einschlagwerkzeug oder ein Auswechseln des Bohrers gegen das Einschlagwerkzeug erforderlich ist.

Der Erfindung liegt die Aufgabe zugrunde, eine Bohrvorrichtung zu schaffen, bei der dieser Nachteil nicht mehr auftritt.

Erfindungsgemäß wird dies dadurch erreicht, daß über die durch die Anschlagplatte gebildete Stirnseite der Bohrglocke eine Abdeckscheibe aufsetzbar ist, an der ein über den Bohrer stülpbares rohrförmiges Einschlagwerkzeug angeordnet ist, dessen Stirnseite dem im Bohrloch zu verankernden Dübel angepaßt ist.

Nach der Herstellung des Bohrloches mit der Bohrvorrichtung wird auf die Stirnseite der Bohrglocke die mit dem Einschlagwerkzeug versehene Abdeckscheibe aufgesetzt, wobei die Bohrung des Einschlagwerkzeuges im Durchmesser größer ist als die Breite des Bohrplättchens und länger als der die Stirnseite der Bohrglocke überragende Teil des Bohrers. Der Außendurchmesser des Dübels entspricht dem Bohrlochdurchmesser und damit der Breite des Bohrplättchens. Somit muß die Bohrung des Einschlagwerkzeuges im Bereich der Stirnseite reduziert sein, damit eine Auflage an der Stirnseite des Dübels möglich wird. Mit der Schlagbohrmaschine wird nun über die Bohrvorrichtung und dem Einschlagwerkzeug die Schlagwirkung auf die Dübelhülse aufgebracht und diese damit über den am Bohrlochgrund aufsitzenden Spreizkörper in die Hinterschneidung des Bohrloches eingetrieben. Durch die Abdeckscheibe wird das Einschlagwerkzeug gehalten und ein Verkanten beim Eintreiben der Dübelhülse vermieden.

In einer weiteren Ausgestaltung der Erfindung kann das Einschlagwerkzeug unmittelbar an der Anschlagplatte abgestützt sein. Das Einschlagwerkzeug besteht vorzugsweise aus einer gehärteten Stahldüse. Durch die unmittelbare Abstützung des Einschlagwerkzeuges an der Anschlagplatte wird die Schlagwirkung der Schlagbohrmaschine nahezu ungedämpft auf die Dübelhülse übertragen.

Schließlich kann in einer weiteren Ergänzung der Erfindung auf das Einschlagwerkzeug eine in das Bohrloch passende Saugdüse aufsetzbar sein. Durch die rohrförmige Ausbildung des Einschlagwerkzeuges ist es über das Einschlagwerkzeug und der auf dem Einschlagwerkzeug aufgesetzten Saugdüse möglich, das Bohrmehl aus dem Bohrloch mittels einer am Absaugstutzen der Bohrglocke angeschlossenen Absaugvorrichtung abzusaugen. Damit ist auch zum Absaugen ein Ausspannen der Bohrvorrichtung nicht erforderlich. Darüber hinaus wird durch den über den Bohrer geleiteten Luftstrom eine Abkühlung des Bohrers nach jedem Bohrvorgang erreicht.

In der Zeichnung ist ein Ausführungsbeispiel der Erfindung dargestellt. Es zeigt

Fig. 1 die Bohrvorrichtung mit aufgesetzter Abdeckscheibe und Einschlagwerkzeug zur Verankerung des Dübels,

Fig. 2 die auf dem Einschlagwerkzeug aufgesetzte Saugdüse.

Der Bohrer besteht aus dem Bohrschaft 1 und dem mit diesem verbundenen Bohrplättchen 2. Zur Bohrmehlabfuhr ist der Bohrschaft 1 mit den Schaft schraubenlinienförmig umwindenden Nuten 3 versehen. Zur Verbindung des Bohrers mit der Bohreraufnahme 4 weist dieser ein Außen-Rundgewinde 5 auf, das in ein entsprechendes Innengewinde der Bohreraufnahme 4 paßt. Die Bohreraufnahme 4 ist mit dem halbkugelförmig ausgebildeten Anschlagbund 6 versehen. Dieser Anschlagbund 6 stützt sich in einer Mulde 7 der auf der Oberfläche des Mauerwerks 8 beim Bohren aufliegenden Anschlagplatte 9 ab. Dadurch ergibt sich ein Schwenklager, das es ermöglicht, den Bohrer während des Bohrvorganges auszuschwenken und durch Rühren die Hinterschneidung 10 des Bohrloches 11 auszubilden. Der die Mulde 7 tragende Teil der Anschlagplatte 9 ist vorzugsweise gehärtet und in einer Metallscheibe 9a eingebettet. Zur Zentrierung und Halterung der Anschlagplatte 9 weist diese einen hülsenförmigen in das Bohrloch 11 eingreifenden Zentrieransatz 12 auf.

Zum Absaugen des Bohrmehls und zur besseren Handhabung ist die Anschlagplatte 9 über einen Bajonettverschluß, Stiftverbindung, Schraubverbindung oder dgl. mit der Bohrglocke 13 verbunden, die mit einem seitlich abstehenden, als Handgriff ausgebildeten Absaugstutzen 14 versehen ist. An diesen Absaugstutzen 14 ist der Schlauch 15 einer Absaugvorrichtung angeschlossen.

Zur Verankerung des Dübels 16 in dem vorbereiteten Bohrloch wird auf die Stirnseite der Bohrglocke 13 die mit dem Einschlagwerkzeug 17 versehene Abdeckscheibe 18 aufgesetzt, die zu diesem Zweck einen die Umfangsfläche der Bohrglocke übergreifenden Flansch 19 aufweist. Die Halterung des Einschlagwerkzeuges 17 in der Abdeckscheibe 18 ist so gestaltet, daß das gehärtete Einschlagwerkzeug unmittelbar an der aus Metall bestehenden Anschlagplatte 9 abgestützt ist. Der Bohrungsdurchmesser des Einschlagwerkzeuges 17 ist etwas größer als die Breite des Bohrplättchens 2, so daß das Einschlagwerkzeug über den Bohrer stülpbar ist. Die an der Dübelhülse anstoßende Stirnseite 17a des Einschlagwerkzeuges 17 ist in Anpassung an die Abmessungen der Dübelhülse im Durchmesser reduziert. Über das Einschlagwerkzeug 17, die Anschlagplatte 9 und der Bohreraufnahme 4 wird die Schlagwirkung der Schlagbohrmaschine 20 auf die Dübelhülse übertragen. Durch Aufgleiten der Spreizlamellen 16a auf den Konus des am Bohrlochgrund aufsitzenden Spreizkörpers 21 wird der Dübel in der Hinterschneidung 10 des Bohrloches 11 aufgespreizt.

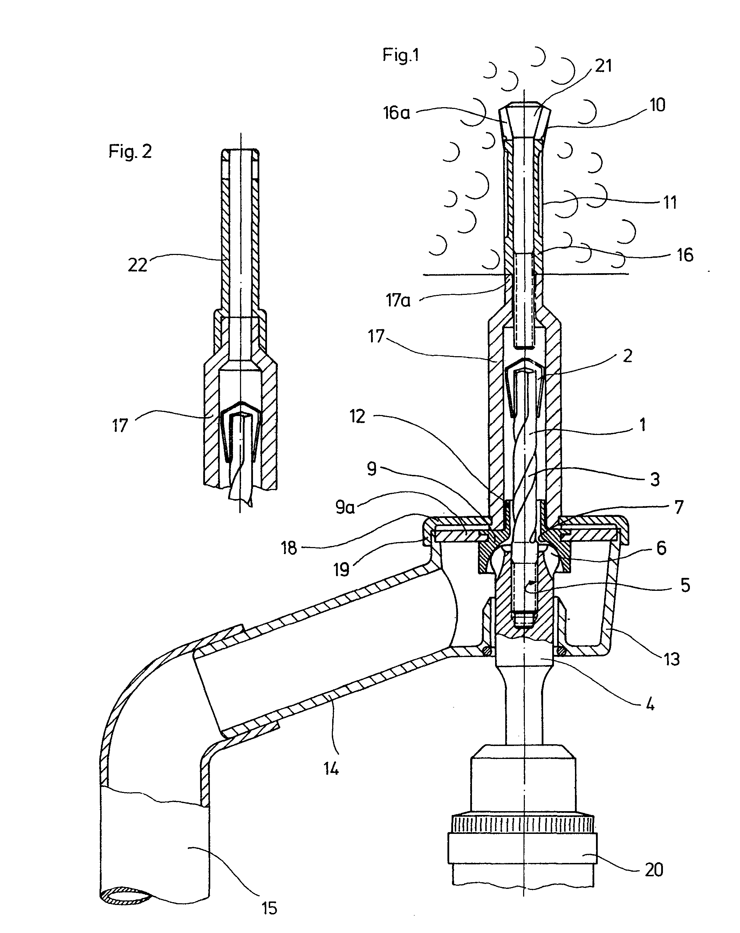

Sofern nicht schon beim Bohren das Bohrmehl im Bohrloch ausreichend abgesaugt wird, kann vor dem Eintreiben des Dübels noch eine zusätzliche Bohrlochsäuberung vorgenommen werden. Zu diesem Zweck wird auf das Einschlagwerkzeug 17 gemäß Fig. 2 eine in das Bohrloch 11 passende Saugdüse 22 aufgesetzt und diese bei eingeschalteter Absaugvorrichtung in das Bohrloch eingeschoben. Das Bohrmehl wird dabei über die Saugdüse 22, dem rohrförmigen Einschlagwerkzeug 17, der Bohrglocke 13 und dem an der Bohrglocke angeordneten Absaugstutzen 14 abgesaugt. Somit ist mit der erfindungsgemäßen Bohrvorrichtung weder zur Absaugung noch zum Verankern des Dübels ein Ausspannen der Bohrvorrichtung erforderlich.

## Patentansprüche

1. Zur Herstellung von Bohrlöchern (11) mit Hinterschneidung (10) bestimmte Bohrvorrichtung, bestehend aus einem Bohrer mit einem radial den Bohrschaft (1) überragende Seitenschneiden aufweisenden Bohrplättchen (2), einer Bohreraufnahme (4) mit Anschlagbund (6), der sich in einer Mulde (7) einer über den Bohrschaft (1) gestülpten Anschlagplatte (9) zur Bildung eines Schwenklagers abstützt, und einer mit der Anschlagplatte (9) verbindbaren Bohrglocke (13), die mit einem Absaugstutzen (14) versehen ist, dadurch gekennzeichnet, daß über die durch die Anschlagplatte (9) gebildete Stirnseite der Bohrglocke (13) eine Abdeckscheibe (18) aufsetzbar ist, an der ein über den Bohrer stülpbares rohrförmiges Einschlagwerkzeug (17) angeordnet ist, dessen Stirnseite dem im Bohrloch zu verankernden Dübel (16) angepaßt ist.

2. Bohrvorrichtung nach Anspruch 1, dadurch gekennzeichnet, daß das Einschlagwerkzeug (17) unmittelbar an der Anschlagplatte (9) abgestützt ist.

3. Bohrvorrichtung nach Anspruch 1, dadurch gekennzeichnet, daß auf das Einschlagwerkzeug (17) eine in das Bohrloch (11) passende Saugdüse (22) aufsetzbar ist.

## Claims

1. Drill unit for producing drill holes (11) having an undercut (10), and comprising a drill with a small drilling bit (2) having lateral cutting edges that project radially from the drill shaft (1), a drill holder (4) having a stop collar (6) which, to form a swivel bearing, is supported in a recess (7) of a stop plate (9) mounted over the drill shaft (1), and a drill bell (13) for attachment to the stop plate (9) and provided with a suction union (14), characterised in that there can be mounted over the stop plate end of the drill bell (13) a cover plate (18) adjacent to which is arranged a tubular punch (17) that can be mounted over the drill and the end of which matches the dowel (16) to be fastened in the drill hole.

2. Drill unit according to claim 1, characterised in that the punch (17) is supported directly on the stop plate (9).

3. Drill unit according to claim 1, characterised in that a suction nozzle (22) that fits into the drill hole (11) can be mounted on the punch (17).

## Revendications

1. Dispositif de perçage destiné à ménager des trous forés (11) à contre-dépouille (10), comprenant un foret à ailette de perçage (2) munie de tranchants latéraux en saillie radialement au-delà de la mèche (1); un logement (4) du foret, doté d'un collet de butée (6) en appui dans une auge (7) d'une plaquette de butée (9) enfilée sur la mèche (1), en vue de former un palier de pivotement; ainsi qu'une cloche de perçage (13) pouvant être reliée à la plaquette de butée (9) et pourvue d'un raccord d'aspiration (14), dispositif caractérisé par le fait qu'un disque de recouvrement (18) peut être placé sur la face frontale de la cloche de perçage (13) formée par la plaquette de butée (9), disque sur lequel se trouve un outil tubulaire d'insertion à force (17), qui peut être enfilé sur le foret et dont la face frontale est adaptée à la cheville (16) devant être ancrée dans le trou foré.

2. Dispositif de perçage selon la revendication 1, caractérisé par le fait que l'outil d'insertion à force (17) est directement en appui contre la plaquette de butée (9).

3. Dispositif de perçage selon la revendication 1, caractérisé par le fait qu'une douille d'aspiration (22) s'engageant par complémentarité dans le trou foré (11), peut être montée sur l'outil d'insertion à force (17).

Fig.1

Fig. 2